# EUROPÄISCHE PATENTSCHRIFT

(11) **EP 2 498 971 B1**
(45) Veröffentlichungstag und Bekanntmachung des Hinweises auf die Patenterteilung: **12.07.2017**
(21) Anmeldenummer: 10776106.6
(22) Anmeldetag: 10.11.2010
(51) Int. Cl.: B29C 47/90, B29C 47/88, B29C 47/34

(54) **VORRICHTUNG UND VERFAHREN ZUM KALIBRIEREN VON FOLIENSCHLÄUCHEN**
DEVICE AND METHOD FOR CALIBRATING FILM TUBING
DISPOSITIF ET PROCÉDÉ DE CALIBRAGE DE TUBES SOUFFLÉS

(30) Priorität: 10.11.2009 DE 102009046587
(43) Veröffentlichungstag der Anmeldung: 19.09.2012
(73) Patentinhaber: Windmöller & Hölscher KG, 49525 Lengerich (DE)
(72) Erfinder: RÜBBELKE, Ingo, 59590 Geseke (DE); BERGMANN, Till, 49504 Lotte (DE)
(86) Internationale Anmeldenummer: PCT/EP2010/067237
(87) Internationale Veröffentlichungsnummer: WO 2011/058072

(56) Entgegenhaltungen:
- AT-B- 325 845
- DE-A1- 1 704 487
- DE-A1- 2 125 903
- DE-T2- 60 211 541
- GB-A- 1 152 564
- GB-A- 1 410 573
- GB-A- 1 573 574
- JP-A- 57 195 625
- US-A- 3 543 334

## Beschreibung

Die Erfindung betrifft eine Vorrichtung zum Kalibrieren von Folienschläuchen nach dem Oberbegriff des Anspruchs 1 sowie ein Verfahren zum Kalibrieren von Folienschläuchen nach dem Oberbegriff des Anspruchs 10.

Vorrichtungen zum Kalibrieren von Folienschläuchen sind schon lange bekannt. Neben der Kalibrierung des Folienschlauches dienen diese Vorrichtungen auch der schnellen Abkühlung des Folienschlauches. Die Abkühlgeschwindigkeit hat dabei einen entscheidenden Einfluss auf die Transparenz der späteren Folie. In der Regel bedeutet eine hohe Abkühlgeschwindigkeit auch eine hohe Transparenz. Aus diesem Grunde wird zur Kühlung eine Flüssigkeit verwendet, da Flüssigkeiten gegenüber einem Gas eine hohe Wärmekapazität aufweisen. Der einfachen Handhabung wegen wird oft Wasser verwendet. Da auf eine Flüssigkeit im Vergleich zu einem Gas sich jedoch die Schwerkraft deutlich auswirkt, werden die so gekühlten Folienschläuche in Richtung der Schwerkraft, also nach unten, aus einem Blaskopf extrudiert.
Die Offenlegungsschrift DE 2 005 182 zeigt eine solche Vorrichtung. Die dort offenbarte Vorrichtung umfasst einen Ring, an dessen Innenwand der extrudierte Folienschlauch entlang führbar ist. Die Innenwand des Ringes begrenzt also den Raum für den Folienschlauch, so dass dieser auf diesen Durchmesser festgelegt wird und damit stets denselben Durchmesser aufweist. Der Ring wird in der Fachwelt auch oft "Kalibrierhülse" genannt.
Weiterhin umfasst die dort angegebene Vorrichtung eine Kühlflüssigkeitsbereitstellungseinrichtung, mit welcher eine Kühlflüssigkeit bereitstellbar ist, welche zwischen die Innenwand und den Folienschlauch leitbar ist. Die Kühlflüssigkeit wird durch die poröse Wand des Ringes geleitet und gelangt so zwischen die Außenoberfläche des Folienschlauches und die Innenwand des Ringes, so dass beide sich nicht berühren, aber ein guter Wärmeaustausch stattfinden kann. Auf diese Weise lassen sich transparente Folien produzieren.

Die Druckschrift AT 325 845 zeigt ebenfalls eine Kalibrierhülse, mit der eine Kühlflüssigkeit auf die Außenwand des Folienschlauches bringbar ist. Unterhalb dieser Hülse ist eine weitere Hülse angeordnet, durch deren poröse Innenwand die Kühlflüssigkeit wieder abgesaugt werden kann.

Die GB 1 410 573 zeigt zwar eine andersartig aufgebaute Kalibrierhülse im Vergleich zur vorgenannten Druckschrift, jedoch wird auch hier eine Kühlflüssigkeit auf die Außenseite des Folienschlauches gegeben und im weiteren Transportverlauf wieder abgesaugt.

Die GB 1 152 564 offenbart eine Vorrichtung zum biaxialen Recken eines Folienschlauches, bei der anstelle einer Kühlflüssigkeit Luft zum Kühlen vorgesehen ist. Im weiteren Verlauf wird der Außenumfang des Folienschlauches mit einem Unterdruck beaufschlagt, so dass der Folienschlauch gegen die Innenwand gezogen wird. Dadurch wird der Folienschlauch gehalten und ein Reißen vermieden.

Die US 3 543 334 zeigt eine Vorrichtung, die nach dem gleichen Prinzip wie die AT 325 845 funktioniert.

Nachteilig ist allerdings, dass mit solchen Vorrichtungen, die mit einer Kühlflüssigkeit zum Kühlen arbeiten, nur Folienschläuche aus bestimmten Materialien herstellbar sind. Bei bestimmten Materialien wie beispielsweise Polypropylen (PP) kann der gerade extrudierte Bereich des Folienschlauches, der sich oberhalb der Frostlinie befindet, den sich weiter unten und damit abgekühlten Teil des Folienschlauches nicht halten. Die so genannte eigene Haltekraft ist bei einigen Materialien nahe Null. Solche Materialien lassen sich also nicht mittels einer beschriebenen Vorrichtung herstellen. Um aus solchen Materialen transparente Folien herzustellen, muss auf andere Vorrichtungen und Verfahren wie etwa das Produzieren so genannter Flachfolien zurückgegriffen werden. Auf diese Weise lassen sich solche Folien allerdings nicht effizient herstellen.

Die Aufgabe der vorliegenden Erfindung ist es daher, eine Vorrichtung vorzuschlagen, mit welcher Folienschläuche aus weiteren Materialien mit einer hohen Effizienz herstellbar sind.

Erfindungsgemäß wird diese Aufgabe durch die Merkmale des kennzeichnenden Teils des Anspruchs 1 gelöst. Demnach ist vorgesehen, .
- dass an der Auslaufseite der Kammer ein weiterer umlaufender und mit Hohlräumen versehener Körper vorgesehen ist,
- dass in den Hohlraum ein Fluid, welches unter Überdruck steht, einleitbar ist, und
- dass die dem Folienschlauch (2) zugewandte Wandung (33) des mit Hohlräumen (31) versehenen Körpers (30) für dieses Fluid durchlässig ist, wobei die Wandung in Transportrichtung (z) des Folienschlauches (2) kegelstumpfförmig zuläuft, wobei die Wandung (33) mit der Transportrichtung (z) einen Winkel zwischen 0 und 30 Grad einnimmt.

Mit "Austrittsbereich des Ringes" ist dabei das untere Ende des Ringes gemeint. Eine Öffnung der Kammer kann beispielsweise dadurch erzeugt werden, dass in die Innenwand des Ringes eine umlaufende Nut eingebracht werden kann. Die Nut stellt dann die Öffnung dar. Jedoch ist diese Kammer durch ein Element verschlossen, welches für die Kühlflüssigkeit durchlässig ist. Ein solches Element kann ein Bahnstück sein, das als Membran bezeichnet werden kann. Bei der Beaufschlagung der Kammer mit einem Unterdruck wird dann zumindest ein Teil der Kühlflüssigkeit, welche sich zwischen dem Ring und dem Folienschlauch befindet, abgesaugt. Es kann also ein Kühlflüssigkeitsumlauf erzeugt werden. Etwas Kühlflüssigkeit kann zwar auf dem Folienschlauch verbleiben, doch sind diese Mengen verhältnismäßig gering. Der wesentliche Effekt ist jedoch, dass durch den Unterdruck auch der Folienschlauch im Bereich des Elements nach außen gezogen wird. Da im Auslaufbereich des Ringes der Folienschlauch schon so weit verfestigt ist, dass seine eigene Haltekraft ausreichend hoch ist, um die weiter unten befindlichen Abschnitte zu halten, kann durch die Aufprägung einer radial nach außen gerichteten Kraft der Folienschlauch gehalten werden. Diese aufgeprägte äußere Haltekraft ist ausreichend, so dass der Bereich des Folienschlauches oberhalb der Frostlinie einer geringeren Zugkraft ausgesetzt ist. Zur Erhöhung der nach außen gerichteten Kraft können mehrere der beschriebenen Ringe verwendet werden. Auch das Vorsehen mehrerer Kammern in einem Ring kann diesem Zweck dienlich sein.

Weiterhin ist erfindungsgemäß vorgesehen, dass oberhalb des unteren Randes der Kammer ein weiterer, ringförmiger Körper vorgesehen ist, welcher eine dem Folienschlauch zugewandte Fläche umfasst, welche gegenüber der Außenoberfläche des Folienschlauches geneigt ist. Die Fläche läuft dabei in Transportrichtung des Folienschlauches kegelförmig zu. Auf diese Weise wird der Folienschlauch, der im Bereich der Öffnung der Kammer einen meist größeren Innendurchmesser aufweist, wieder sukzessive auf seinen ursprünglichen Durchmesser zurückgeführt. Das Bahnstück verläuft dabei auf der Innenseite dieser Fläche, so dass der Folienschlauch nicht direkt mit der Fläche in Kontakt kommt.

Zudem ist vorgesehen, dass der Körper mit einem Fluid, welches unter Überdruck steht, beaufschlagbar ist und wenn die dem Folienschlauch zugewandte Fläche für dieses Fluid durchlässig ist. Das Fluid kann beispielsweise eine Flüssigkeit, etwa die Kühlflüssigkeit, sein. Es kann aber auch vorgesehen sein, an dieser Stelle ein Gas, beispielsweise Luft, zu nutzen. Ein Gas ist an dieser Stelle besonders vorteilhaft. Das Fluid gelangt durch den Überdruck zwischen das Bahnstück und den Folienschlauch und stellt hier einen Gleitfilm zwischen Bahnstück und Folienschlauch dar, so dass das Rückführen des Durchmessers des Folienschlauchs auf den ursprünglichen Durchmesser berührungsfrei erfolgen kann.

In einer vorteilhaften Ausführungsform der Erfindung verläuft die Kammer vollständig um den Folienschlauch herum. Zwar können in Umlaufrichtung mehrere Kammern vorgesehen sein. Das Vorsehen einer umlaufenden Kammer bietet den Vorteil, dass die nach außen gerichtete Haltekraft gleichmäßig auf dem Umfang des Folienschlauches verteilt ist. Auch das Bahnstück ist dann vorteilhafterweise endlos umlaufend.

Weiterhin ist es vorteilhaft, wenn das Bahnstück wenigstens ein elastomeres Material umfasst. Damit wird erreicht, dass bei Variation des Unterdrucks auch das Bahnstück mehr oder weniger nach außen gezogen wird. Damit wird vermieden, dass das Bahnstück den Folienschlauch berührt und diesen dann beschädigt.

Für das Bahnstück sind verschiedene Ausgangsmaterialien denkbar. Vorteilhaft ist hier etwa ein flüssigkeitsdurchlässiges Gewebe. Ein solches Gewebe kann Kunststofffasern umfassen, welche zudem elastisch sein können. Grundsätzlich sind aber auch ein oder mehrere Festkörper, die porös sind, denkbar. Hier kommen beispielsweise gesinterte Materialien in Betracht. Eine Durchlässigkeit von Flüssigkeit kann aber auch durch verschiedene andere Materialien, die mit Bohrlöchern versehen sind, sichergestellt werden.

Vorteilhaft ist es, wenn der Ring von Leitungen durchsetzt ist, durch welche ein Kühlmedium leitbar ist. Die Leitungen können Bestandteil eines weiteren Kreislaufs sein, der unabhängig vom gegebenenfalls vorhandenen Kreislauf für die oben erwähnte Kühlflüssigkeit ist. Das Kühlmedium und die Kühlflüssigkeit können verschiedenartig sein. Auch können sie durch verschiedene Temperiereinrichtungen unterschiedlich temperierbar sein. Mittels der erwähnten Leitungen kann der Ring gekühlt werden, wodurch der schnelle Abtransport einer großen Wärmemenge vom Folienschlauch sichergestellt ist.

In einer weiteren vorteilhaften Ausführungsform der Erfindung kann - in Transportrichtung des Folienschlauches gesehen - der Ring in seiner Ausdehnung veränderbar sein. Die für den Folienschlauch nutzbare Kühlstrecke kann damit verändert werden, so dass der Folienschlauch stärker gekühlt werden kann. Der Ring kann dabei beispielsweise aus mehreren einzelnen Ringstücken bestehen, die gestapelt sein können. Je nach gewünschter Kühlstrecke werden mehr oder weniger Ringstücke aufgestapelt. Die Ringstücke können auf geeignete Weise miteinander verbindbar sein. In einer anderen Alternative können Ringstücke gegeneinander verschiebbar gehalten werden, wobei ein Teil der Ringstücke Fortsätze umfassen, die Teile der Innenwände anderer Ringstücke abdecken, so dass nach dem Verschieben keine freien Bereiche entstehen.

Um das Befestigen des Bahnstücks an dem Ring einfach zu halten, ist es besonders vorteilhaft, dass am oberen Rand und am unteren Rand der Kammer jeweils ein umlaufender Balken vorgesehen ist, an welchen das Bahnstück befestigbar ist. Die Befestigung des Bahnstücks an den Balken kann auf unterschiedliche Arten erfolgen. So können mit den Balken verschraubbare Leisten vorgesehen sein, die das Bahnstück gegen die Balken drücken. Dabei können die Balken zu den Leisten komplementäre Vertiefungen wie etwa Nuten umfassen, so dass die Leisten nicht über den Innenumfang des Ringes hinausragen. Auch Klammern sind zur Befestigung des Bahnstücks denkbar. Dem Fachmann sind weitere Befestigungsarten bekannt, die er hier anwenden kann.

Vorteilhaft ist, wenn in Transportrichtung des Folienschlauches die Höhe der Kammer veränderbar ist. Damit kann die Größe der nach außen auf den Folienschlauch wirkenden Kraft verändert werden. Auch ein Vorspannen des Bahnstücks ist möglich, so dass er aufgrund des Einflusses des Unterdrucks nicht so stark nach außen gezogen wird.

Weitere Ausführungsbeispiele der Erfindung gehen aus der gegenständlichen Beschreibung und der Zeichnung hervor.
Deren einzelnen Figuren zeigen:
- Fig. 1: Vorrichtung nach dem Stand der Technik
- Fig. 2: eine erfindungsgemäße Vorrichtung.
- Fig. 3: eine weitere Ausführungsform einer erfindungsgemäßen Vorrichtung
- Fig. 4: eine weitere Ausführungsform, in der der Ring mehrere Ringsegmente umfasst
- Fig. 5: eine weitere Ausführungsform, in der der Ring mehrere Ringsegmente umfasst, welche gegeneinander verschiebbar sind
- Fig. 6: Ausschnitt aus der Figur 5, wobei die Ringsegmente gegeneinander verschoben wurden

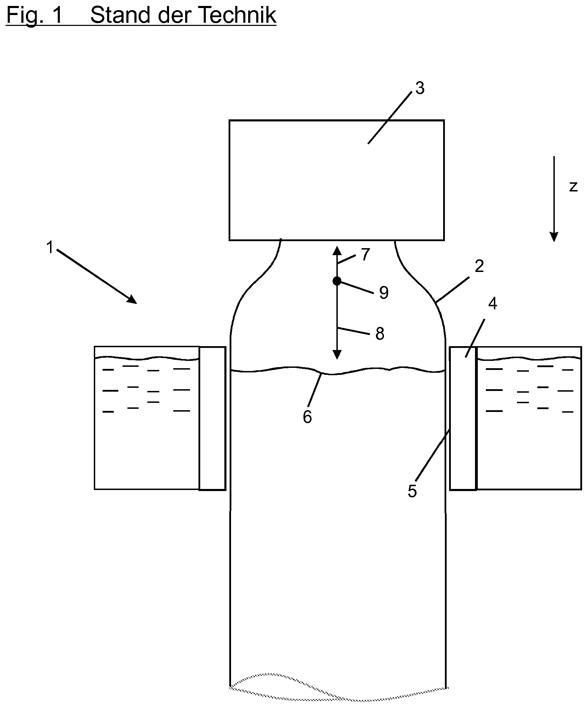

Fig. 1 zeigt eine Vorrichtung 1 zum Kalibrieren eines Folienschlauchs 2 nach dem durch die DE 2 005 182 offenbarten Stand der Technik. Der Folienschlauch 2 wird durch einen ringförmigen Austrittspalt des Blaskopfes 3 in Richtung z der Schwerkraft nach unten extrudiert. Durch eine nicht gezeigte Zuführleitung wird in der Regel ein Gas in das Innere des Folienschlauches 2 geführt, welches einen gegenüber dem Umgebungsdruck erhöhten Druck aufweist. Aus diesem Grunde weitet sich der Folienschlauch bei seinem Transport in Richtung z zunächst weiter auf. Aufgrund des Gasinhalts des Folienschlauches wird auch oft von einer Folienblase gesprochen. Das Aufweiten nimmt erst bei Einlauf des Folienschlauches in einen Ring 4, der ein wesentlicher Bestandteil der Vorrichtung 1 ist, ein Ende. Hier ist die radiale Ausdehnungsmöglichkeit des Folienschlauches durch die Innenwand 5 begrenzt. Oft verfestigt sich der Folienschlauch nach Einlauf in die Vorrichtung zu einem kristallinen oder teilkristallinen Verbund. Dies erfolgt durch Abkühlung unterhalb des Schmelzpunktes des Materials des Folienschlauches. Die umlaufende Linie, die durch die Punkte des Übergangs von geschmolzen zu fest festgelegt ist, wird als Frostlinie 6 bezeichnet.

Die Kräfte, die auf den Folienschlauch wirken, sind im Wesentlichen die eigene Haltekraft 7 des Folienschlauches, die mit dessen Festigkeit im Zusammenhang steht, sowie die Zugkraft 8, die maßgeblich durch die Gewichtskraft des Folienschlauches und durch die Kraft, die von angetriebenen Folientransporteinrichtungen (beispielsweise Abzugswalzen) aufgebracht werden, zustande kommt. Für einen Punkt 9 im Folienschlauch 2 oberhalb der Frostlinie sind die Kräfteverhältnisse für bestimmte Materialien wie etwa PP durch die Länge der Pfeile 7 und 8 dargestellt. Der Pfeil 7 stellt die maximale Haltekraft, die der Folienschlauch aufbringen kann, dar. Dieser Pfeil ist deutlich kürzer als der die Zugkraft darstellende Pfeil 8. Ein Abriss der Folie oberhalb der Frostlinie wird unweigerlich auftreten. Bestimmte Materialien lassen sich in der Vorrichtung des Standes der Technik nicht zu einem Folienschlauch aus Kunststoff mit gewünschter Transparenz verarbeiten.

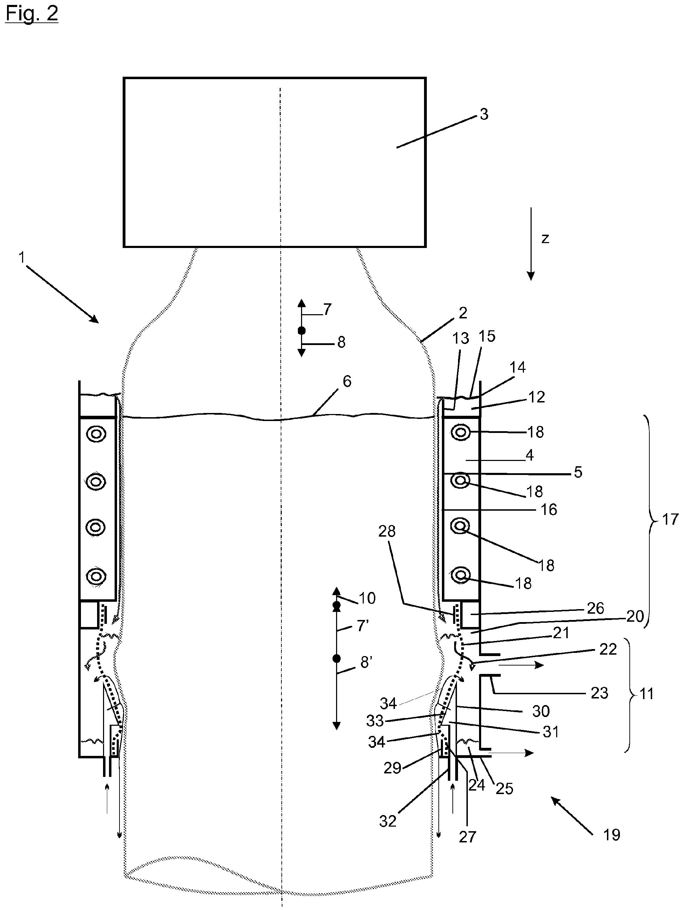

Abhilfe schafft hier eine Vorrichtung, wie sie im Folgenden anhand des in der Figur 2 gezeigten Ausführungsbeispiels erläutert wird. Wesentlich bei der Erfindung ist es, dass eine Einrichtung 11 vorgesehen ist, welche auf den Folienschlauch eine Kraft in radialer Richtung ausübt, so dass eine Gleitreibungskraft 10 entsteht, die der Zugkraft 8 entgegen gerichtet ist. Ein Beispiel dieser Einrichtung 11 wird weiter unten detailliert beschrieben.

Unterhalb der Frostlinie 6 wirkt auf den Folienschlauch die Zugkraft 8'. Dieser Kraft entgegen gerichtet ist nun nicht nur die Haltekraft 7', die im Vergleich zur Haltekraft 7 oberhalb der Frostlinie vergrößert ist, sondern auch die Gleitreibungskraft 10. Die Kräfte werden vorteilhafterweise so eingestellt, dass der Folienschlauch mit einer gewünschten Geschwindigkeit transportiert wird, aber nicht reißt. An den Punkten oberhalb der Frostlinie haben sich die Kräfteverhältnisse gegenüber dem Stand der Technik verändert. Da nun nicht mehr der Folienschlauch mit seiner vollen Gewichtskraft zieht, sondern nur noch mit der Gewichtskraft des Schlauchabschnitts bis zu der Höhe, in der die radiale Kraft aufgebracht wird, ist die Zugkraft 8 nun kleiner als die maximale Haltekraft 7. Materialien, deren maximale Haltekraft 7 nicht sehr groß ist, können mit einer erfindungsgemäßen Vorrichtung hergestellt werden.

Der Ring 4 umfasst in diesem Ausführungsbeispiel zunächst zumindest einen oberen Graben, dessen dem Folienschlauch zugewandte Wand 13 niedriger ist als die Außenwand 14, so dass soviel Kühlflüssigkeit 15, im Folgenden abkürzend als Wasser bezeichnet, in den Graben eingefüllt werden kann, dass diese über die Wand 13 hinweg tritt und zwischen die Innenwand 5 des Rings 4 und den Folienschlauch 2 gelangen kann. Der Fluss des Wassers ist anhand des Pfeils 16 dargestellt. Der obere Teil 17 des Ringes 4 ist mit Leitungen 18 versehen, durch den ein Kühlmedium geleitet werden kann. Dieses Kühlmedium transportiert die Wärme ab, die dem Schlauch 2 durch das Wasser 15 und dem Ring 4 entzogen wird.

Der untere Bereich 19 des Ringes 4 umfasst zur Ausübung einer Radialkraft des Folienschlauches 2 eine umlaufende Kammer 20, die auf der dem Folienschlauch 2 zugewandten Seite eine ebenfalls umlaufende Öffnung aufweist. Diese Kammer 20 ist jedoch durch ein umlaufendes Bahnstück 21 verschlossen, welches vorzugsweise aus wasserdurchlässigem Gewebe besteht. Das Bahnstück 21 ist als gepunktete Linie dargestellt, um die Durchlässigkeit für die Kühlflüssigkeit 15 zu verdeutlichen. Der Durchtritt des Wassers selbst wird durch den Pfeil 22 symbolisiert.

Um nun eine radiale Kraft auf den Folienschlauch 2 ausüben zu können, ist die Kammer über die Saugöffnung 23 mit einer nicht dargestellten Vakuumerzeugungseinrichtung verbunden, mit der ein Unterdruck in der Kammer 20 erzeugbar ist. Der Unterdruck ist allerdings so gewählt, dass das Wasser nicht abgesaugt wird, sondern sich in der Rinne 24 sammeln kann, so dass es über den Anschluss 25 abführbar ist. Mit Unterdruck ist der relativ zum Umgebungsdruck geringere Druck gemeint. Die Druckdifferenz liegt im Bereich von 1 bis 20 mbar, bevorzugt von 1 bis 10 mbar, insbesondere 1 bis 5 mbar. Solche Druckdifferenzen, die je nach Material des Folienschlauches und/oder nach dessen Dicke und/oder weiteren Parametern einzustellen sind, rufen eine ausreichend hohe Gleitreibungskraft hervor, vermeiden aber, dass der Folienschlauch zu stark an das Bahnstück 21 herangezogen wird, was Kratzer oder andere Beschädigungen des Folienschlauches zur Folge hätte.

Zur Fixierung des Bahnstücks 21 ist am oberen Rand und am unteren Rand der Kammer jeweils ein Balken 26, 27 vorgesehen, an welchem das Bahnstück 21 mit dem oberen beziehungsweise unteren Rand befestigt ist. Verschiedene Befestigungsmöglichkeiten stehen grundsätzlich zur Verfügung. Vorteilhaft ist jeweils eine Leiste 28, 29, die mit den Balken 26 und 27 verbunden, beispielsweise verschraubt ist und so die Ränder des Bahnstücks einklemmt. Ein Flächenanteil, der mindestens 10%, bevorzugst aber mindestens 20 % beträgt, ist jedoch unterstützungsfrei, d.h. dass auf der dem Folienschlauch abgewandten Seite das Bahnstück nicht auf einem Körper aufliegt.

An der Auslaufseite der Kammer 20 ist ein weiterer umlaufender und mit Hohlräumen 31 versehener Körper 30 vorgesehen. Über die Zuführöffnung 32 ist in diesen Hohlraum 31 ein Fluid einleitbar, welches unter einem Überdruck steht. Die dem Folienschlauch 2 zugewandte Wandung 33 ist für dieses Fluid durchlässig, so dass es durch diese Wandung und das die Wandung 33 bedeckende Bahnstück 21 hindurch treten kann. Das Fluid bildet einen Fluidfilm, welcher den Folienschlauch berührungslos führt. Der Verlauf des Fluidstroms ist durch den Pfeil 34 wiedergegeben. Der Fluidstrom teilt sich dabei in zwei Komponenten auf. Während ein Teil durch den Folienschlauch mitgezogen wird und die Vorrichtung 1 in Transportrichtung z des Folienschlauches 2 verlässt, gelangt ein zweiter Teil aufgrund des in der Kammer 20 herrschenden Unterdrucks entgegen der Transportrichtung nach oben und wird über die Kammer 20 abgesaugt. Wird als Fluid Luft oder ein anderes Gas verwendet, kann es als Dichtung fungieren und so den Austritt der Kühlflüssigkeit 15 nach unten zu einem Großteil vermeiden.

Die Wandung 33 läuft in Transportrichtung des Folienschlauches 2 kegelstumpfförmig zu, so dass der Folienschlauch sukzessive auf seinen ursprünglichen Durchmesser, den er im oberen Bereich 17 des Ringes 4 eingenommen hat, zurückführbar ist. Die Fläche 33 nimmt dabei mit der Transportrichtung z vorteilhafterweise einen Winkel zwischen 0 und 30 Grad, insbesondere zwischen 5 und 20 Grad ein.

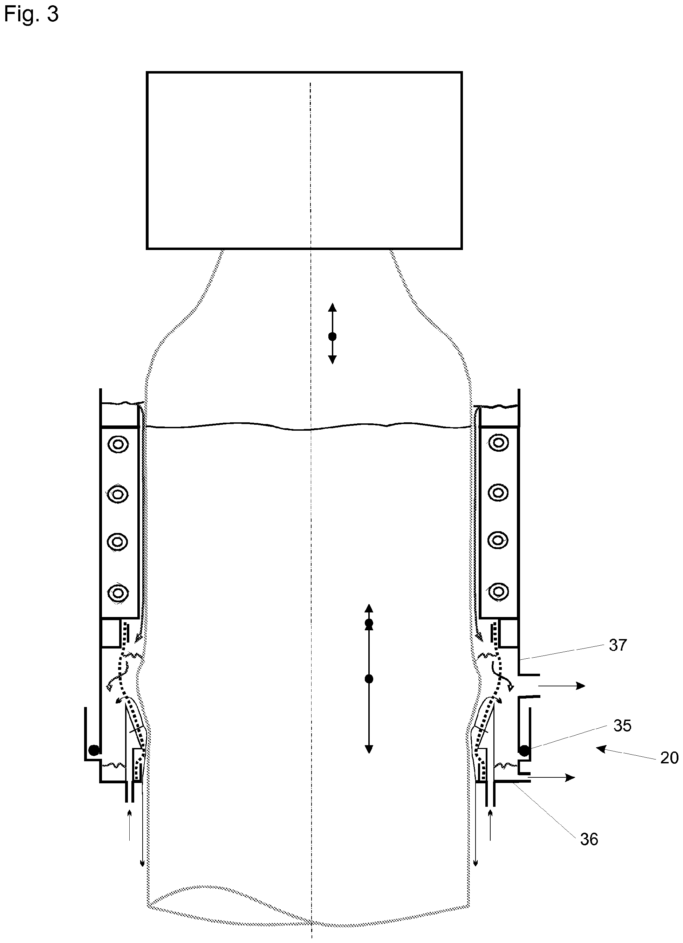

Die Figur 3 zeigt eine weitere Ausführungsform einer erfindungsgemäßen Vorrichtung. Diese Ausführungsform entspricht der Figur 2, jedoch ist die Kammer 20 in ihrer Ausdehnung in Transportrichtung z veränderbar. Dazu ist die Kammer 20 in zwei Teile 36 und 37 unterteilt, die mit der Dichtung 35 gegenüber der Umgebung abgedichtet sind. Einrichtungen zum Einstellen der Höhe und deren Anordnung sind dem Fachmann geläufig und bedürfen daher an dieser Stelle keiner weiteren Erläuterung.

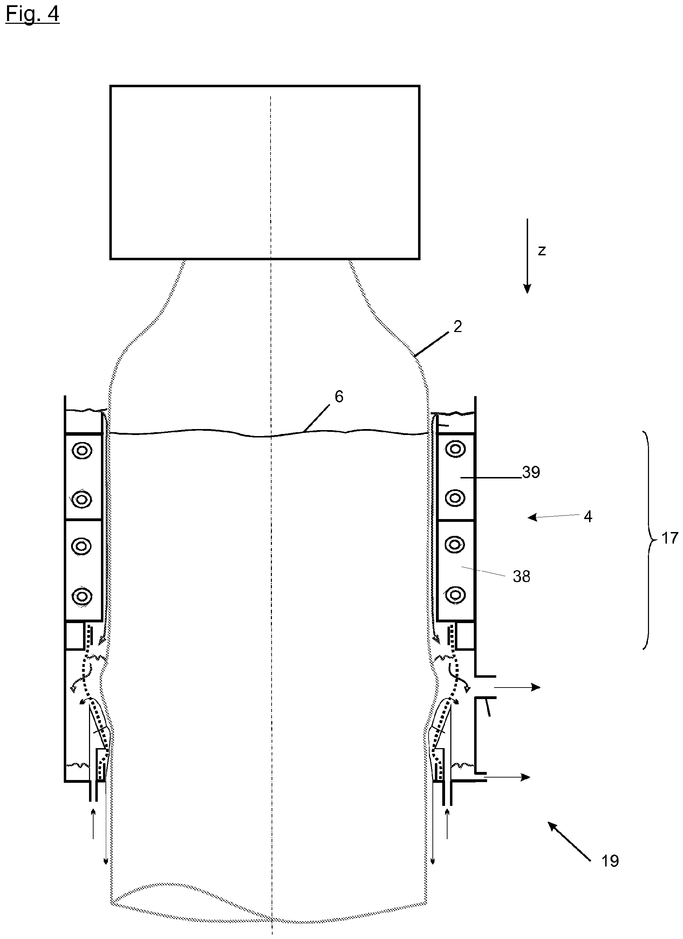

Der Ring 4 in der Figur 4 besteht aus Ringsegmenten. Im vorliegenden Beispiel sind dies die Ringsegmenten 38 und 39. Je nach gewünschter beziehungsweise benötigter Kühlstrecke können weitere Ringsegmente hinzugefügt oder eines der Ringsegmente entnommen werden.

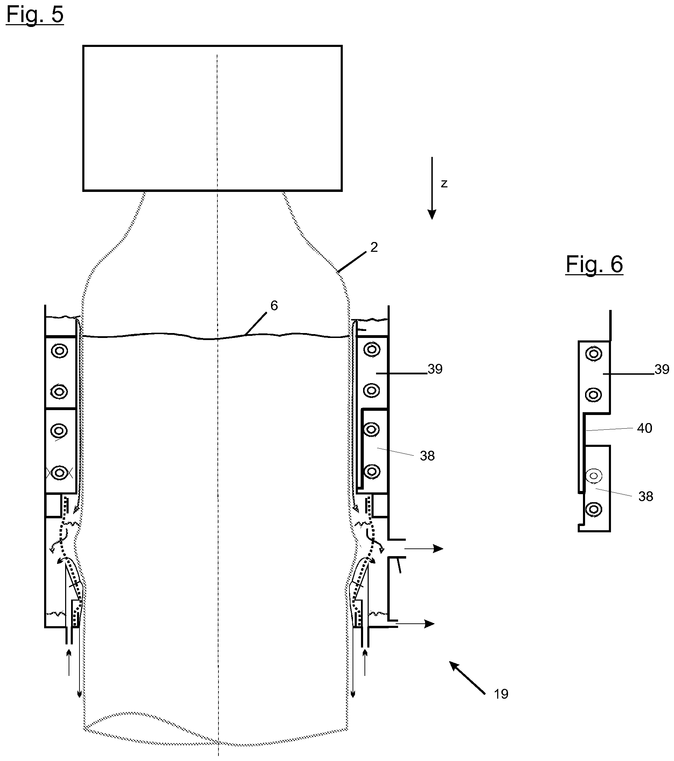

In der Figur 5 umfasst eines der Ringsegmente, hier das Ringsegment 39, einen Fortsatz 40, der mit der Innenwand eines weiteren Ringsegments, hier Ringsegment 38, überlappt. Die Innenflächen der Ringsegmente 38 und 39 und auch des Fortsatzes 40 sind vorzugsweise so ausgestaltet, dass der Ring seine Kalibrierfunktion so gut es geht wahrnehmen kann. Dazu sollten insbesondere scharfe Kanten vermieden werden.

In der Figur 6 sind die beiden Ringsegmente 38 und 39 gegeneinander verschoben worden, so dass die Kühlstrecke verlängert ist. Der Fortsatz 40 überlappt noch immer zum Teil mit der Innenoberfläche des Ringsegments 38, so dass keine Unterbrechung der Kühlstrecke entstanden ist.

Die Ausführungsform gemäß der Figuren 5 und kann auch mit der Ausführungsform gemäß der Figur 4 kombiniert werden. Denkbar ist beispielsweise, dass mehrere Paare korrespondierender Ringsegmente hintereinander angeordnet werden, wobei Paare hinzufügbar oder entfernbar sind. Dadurch entsteht eine sehr große Variabilität der Kühlstrecke.

| **Bezugszeichenliste** | |
|---|---|
| 1 | Vorrichtung zum Kalibrieren eines Folienschlauches 2 |
| 2 | Folienschlauch |
| 3 | Blaskopf |
| 4 | Ring |
| 5 | Innenwand |
| 6 | Frostlinie |
| 7 7' | Maximale Haltekraft |
| 8 8' | Zugkraft |
| 9 | Punkt oberhalb der Frostlinie |
| 10 | Gleitreibungskraft |
| 11 | Einrichtung zum Ausüben einer radialen Kraft auf den Folienschlauch |
| 12 | Oberer Graben |
| 13 | Wand des oberen Grabens |
| 14 | Außenwand |
| 15 | Kühlflüssigkeit |
| 16 | Fluss der Kühlflüssigkeit 15 |
| 17 | Oberer Teil des Ringes 4 |
| 18 | Leitung |
| 19 | Unterer Bereich des Ringes 4 |
| 20 | Umlaufende Kammer |
| 21 | Umlaufendes Bahnstück |
| 22 | Pfeil |
| 23 | Saugöffnung |
| 24 | Rinne |
| 25 | Anschluss |
| 26 | Balken |
| 27 | Balken |
| 28 | Leiste |
| 29 | Leiste |
| 30 | Körper |
| 31 | Hohlraum |
| 32 | Zuführöffnung |
| 33 | Wandung |
| 34 | Fluidstrom |
| 35 | Dichtung |
| 36 | unterer Teil der Kammer 20 |
| 37 | oberer Teil der Kammer 20 |
| 38 | Ringsegment |
| 39 | Ringsegment |
| 40 | Fortsatz |
| z | Richtung der Schwerkraft/Transportrichtung des Folienschlauches |

## Patentansprüche

1. Vorrichtung (1) zum Kalibrieren von Folienschläuchen (2), die mittels eines Blaskopfes (3) extrudierbar sind, welche die folgenden Merkmale umfasst:
- einen Ring (4), entlang dessen Innenwand (5) der extrudierte Folienschlauch (2) in einer Transportrichtung (z) führbar ist,
- eine Kühlflüssigkeitsbereitstellungseinrichtung (12, 13, 14), mit welcher eine Kühlflüssigkeit (15) bereitstellbar ist, welche zwischen die Innenwand (5) und den Folienlauch (2) leitbar ist,
- wobei im Austrittsbereich (19) des Folienschlauches (2) aus dem Ring (4) dieser wenigstens eine offene Kammer (20) umfasst, wobei die zumindest eine Öffnung der Kammer (20) dem Folienschlauch (2) zugewandt ist und durch zumindest ein flüssigkeitsdurchlässiges Element (21) verschlossen ist, und
- wobei die Kammer (20) mit einem Unterdruck beaufschlagbar ist,
**dadurch gekennzeichnet,**
- **dass** an der Auslaufseite der Kammer (20) ein weiterer umlaufender und mit Hohlräumen (31) versehener Körper (30) vorgesehen ist,
- **dass** in den Hohlraum (31) ein Fluid, welches unter Überdruck steht, einleitbar ist, und
- **dass** die dem Folienschlauch (2) zugewandte Wandung (33) des mit Hohlräumen (31) versehenen Körpers (30) für dieses Fluid durchlässig ist, wobei die Wandung (33) in Transportrichtung (z) des Folienschlauches (2) kegelstumpfförmig zuläuft, wobei die Wandung (33) mit der Transportrichtung (z) einen Winkel zwischen 0 und 30 Grad einnimmt.

2. Vorrichtung nach dem vorstehenden Anspruch,
**dadurch gekennzeichnet, dass**
die Kammer (20) vollständig um den Folienschlauch (2) herum verläuft.

3. Vorrichtung nach einem der vorstehenden Ansprüche,
**dadurch gekennzeichnet, dass**
das flüssigkeitsdurchlässige Element (21) ein Bahnstück ist.

4. Vorrichtung nach dem Anspruch 3
**dadurch gekennzeichnet, dass**
das Bahnstück wenigstens ein elastomeres Material umfasst.

5. Vorrichtung nach dem Anspruch 1
**dadurch gekennzeichnet, dass**
das flüssigkeitsdurchlässige Element (21) ein flüssigkeitsdurchlässiges Gewebe umfasst.

6. Vorrichtung nach einem der vorstehenden Ansprüche,
**dadurch gekennzeichnet, dass**
der Ring (4) von Leitungen (18) durchsetzt ist, durch welche ein Kühlmedium leitbar ist.

7. Vorrichtung nach einem der vorstehenden Ansprüche,
**dadurch gekennzeichnet, dass**
der Ring (4) in seiner Ausdehnung in Transportrichtung (z) des Folienschlauches (2) veränderbar ist.

8. Vorrichtung nach einem der vorstehenden Ansprüche,
**dadurch gekennzeichnet, dass**
der obere Rand und der untere Rand der Kammer mit jeweils einem umlaufenden Balken (26, 27) versehen sind, an welcher das Bahnstück (21) befestigbar ist.

9. Vorrichtung nach einem der vorstehenden Ansprüche,
**dadurch gekennzeichnet, dass**
in Transportrichtung (z) des Folienschlauches (2) die Höhe des Kammer veränderbar ist.

10. Verfahren zum Kalibrieren von Folienschläuchen (2), die mittels eines Blaskopfes (3) extrudierbar sind, bei dem:
- der extrudierte Folienschlauch (2) an der Innenwand (5) eines Ringes (4) entlang geführt wird,
- eine Kühlflüssigkeit (15) über eine Kühlflüssigkeitsbereitstellungseinrichtung (12, 13, 14) bereitgestellt wird, wobei die Kühlflüssigkeit (15) zwischen die Innenwand (5) und den Folienlauch (2) geleitet wird,
- wobei im Austrittsbereich (19) des Folienschlauches (2) aus dem Ring (4) dieser wenigstens eine offene Kammer (20) umfasst, wobei die zumindest eine Öffnung der Kammer (20) dem Folienschlauch (2) zugewandt ist und durch zumindest ein flüssigkeitsdurchlässiges Element (21) verschlossen ist,
und
- wobei die Kammer (20) mit einem Unterdruck beaufschlagt wird,
**dadurch gekennzeichnet,**
- **dass** an der Auslaufseite der Kammer (20) ein weiterer umlaufender und mit Hohlräumen (31) versehener Körper (30) vorgesehen ist,
- **dass** in den Hohlraum (31) ein Fluid, welches unter Überdruck steht, eingeleitet wird, und
- **dass** die dem Folienschlauch (2) zugewandte Wandung (33) des mit Hohlräumen (31) versehenen Körpers (30) für dieses Fluid durchlässig ist, wobei die Fläche (33) in Transportrichtung (z) des Folienschlauches (2) kegelstumpfförmig zuläuft, wobei die Wandung (33) mit der Transportrichtung einen Winkel zwischen 0 und 30 Grad einnimmt.

## Claims

1. Apparatus (1) for calibrating film tubes (2) which are extrudable by means of a blow head (3) comprising the following features:
- a ring (4), along whose inner wall (5) the extruded film tube (2) may be guided in a transport direction (z),
- a cooling fluid supply device (12, 13, 14) with which a cooling fluid (15) may be passed between the inner wall (5) and the film tube (2),
- wherein the ring (4) comprises at least one open chamber (20) in the outlet region (19) of the film tube (2), wherein the at least one opening of the chamber (20) faces the film tube (2) and is closed by at least one fluid-permeable element (21), and
- wherein the chamber (20) may be subjected to a vacuum,
**characterized in that**
- a further circumferential body (30) provided with cavities (31) is provided on the outlet side of the chamber (20),
- a fluid under pressure may be introduced into the cavity (31), and
- the wall (33) of the body (30) provided with cavities (31) facing the film tube (2) is permeable to this fluid, wherein the wall (33) tapers in the direction of transport (z) of the film tube (2) in the shape of a truncated cone, and wherein the wall (33) assumes an angle of between 0 and 30 degrees with respect to the direction of transport (z).

2. Apparatus according to the preceding claim,
**characterized in that**
the chamber (20) extends completely around the film tube (2).

3. Apparatus according to one of the preceding claims,
**characterized in that**
the fluid-permeable element (21) is a web piece.

4. Apparatus according to claim 3,
**characterized in that**
the web piece comprises at least one elastomeric material.

5. Apparatus according to claim 1,
**characterized in that**
the fluid-permeable element (21) comprises a fluid-permeable fabric.

6. Device according to one of the preceding claims,
**characterized in that**
the ring (4) is penetrated by lines (18) through which a cooling medium may be passed.

7. Device according to one of the preceding claims,
**characterized in that**
the ring (4) may be varied in its extent in the transport direction (z) of the film tube (2).

8. Apparatus according to one of the preceding claims,
**characterized in that**
the upper edge and the lower edge of the chamber are each provided with a circumferential beam (26, 27) on which the web piece (21) may be fastened.

9. Apparatus according to one of the preceding claims,
**characterized in that**
the height of the chamber may be varied in the transport direction (z) of the film tube (2).

10. Method for calibrating film tubes (2), which may be extruded by means of a blow head (3), wherein:
- the extruded film tube (2) is guided along the inner wall (5) of a ring (4),
- a cooling fluid (15) is passed between the inner wall (5) and the film tube (2), wherein the cooling fluid (15) is supplied via a cooling fluid supply device (12, 13,14),
- wherein the ring (4) comprises at least one open chamber (20) in the outlet region (19) of the film tube (2), wherein the at least one opening of the chamber (20) faces the film tube (2) and is closed by at least one fluid-permeable element (21), and
- wherein the chamber (20) is subjected to a vacuum,
**characterized in that**
- a further circumferential body (30) provided with cavities (31) is provided on the outlet side of the chamber (20),
- a fluid, which is under pressure, is introduced into the cavity (31), and
- the wall (33) of the body (30) provided with cavities (31) facing the film tube (2) is permeable to this fluid, wherein the wall (33) tapers in the direction of transport (z) of the film tube (2) in the shape of a truncated cone, and wherein the wall (33) assumes an angle of between 0 and 30 degrees with respect to the direction of transport (z).

## Revendications

1. Dispositif (1) pour le calibrage de films tubulaires (2), qui peuvent être extrudés au moyen d'une tête de soufflage (3), qui présente les caractéristiques suivantes :
- une bague (4), le long de la paroi interne (5) de laquelle le film tubulaire extrudé (2) peut être guidé dans une direction de transport (z),
- un dispositif d'alimentation en liquide de refroidissement (12, 13, 14) avec lequel un liquide de refroidissement (15) peut être mis à disposition, qui peut être conduit entre la paroi interne (5) et le film tubulaire (2),
- moyennant quoi, dans la zone de sortie (19) du film tubulaire (2) hors de la bague (4), celle-ci comprend au moins une chambre ouverte (20), l'au moins une ouverture de la chambre (20) étant orientée vers le film tubulaire (2) et étant obturée par au moins un élément perméable au liquide (21), et
- la chambre (20) pouvant être alimentée avec une dépression,
**caractérisé en ce que**
- au niveau du côté de sortie de la chambre (20), est prévu un corps (30) circulaire et muni de cavités (31),
- dans la cavité (31), un fluide sous dépression peut être introduit et
- la paroi (33) du corps (30) muni de cavités (31) orientée vers le film tubulaire (2) est perméable à ce fluide, la paroi (33) se resserrant de manière tronconique dans la direction de transport (z) du film tubulaire (2), la paroi (33) formant avec la direction de transport (z) un angle entre 0 et 30 degrés.

2. Dispositif selon la revendication précédente,
**caractérisé en ce que**
la chambre (20) s'étend entièrement autour du film tubulaire (2).

3. Dispositif selon l'une des revendications précédentes,
**caractérisé en ce que**
l'élément perméable au liquide (21) est un élément en forme de bande.

4. Dispositif selon la revendication 3,
**caractérisé en ce que**
l'élément en forme de bande comprend au moins un matériau élastomère.

5. Dispositif selon la revendication 1,
**caractérisé en ce que** l'élément perméable au liquide (21) comprend un tissu perméable au liquide.

6. Dispositif selon l'une des revendications précédentes,
**caractérisé en ce que**
la bague (4) est traversée par des conduites (18) à travers lesquelles un fluide de refroidissement peut être conduit.

7. Dispositif selon l'une des revendications précédentes,
**caractérisé en ce que**
la bague (4) est variable en extension dans la direction de transport (z) du film tubulaire (2).

8. Dispositif selon l'une des revendications précédentes,
**caractérisé en ce que**
le bord supérieur et le bord inférieur de la chambre sont munis chacun d'une barre circulaire (26, 27), sur laquelle l'élément en forme de bande (21) peut être fixé.

9. Dispositif selon l'une des revendications précédentes,
**caractérisé en ce que**
la hauteur de la chambre est variable dans la direction de transport (z) du film tubulaire (2).

10. Procédé de calibrage de films tubulaires (2), qui peuvent être extrudés au moyen d'un tête de soufflage (3), dans lequel :
- le film tubulaire extrudé (2) est guidé le long de la paroi interne (5) d'une bague (4),
- un liquide de refroidissement (15) est mis à disposition par l'intermédiaire d'un dispositif d'alimentation en liquide de refroidissement (12, 13, 14), le liquide de refroidissement (15) étant conduit entre la paroi interne (5) et le film tubulaire (2),
- moyennant quoi, dans la zone de sortie (19) du film tubulaire (2) hors de la bague (4), celle-ci comprend au moins une chambre ouverte (20), l'au moins une ouverture de la chambre (20) étant orientée vers le film tubulaire (2) et étant obturée par au moins un élément perméable au liquide (21) et
- la chambre (20) étant alimentée avec une dépression,
**caractérisé en ce que**
- au niveau du côté de sortie de la chambre (20), est prévu un autre corps circulaire (30) muni de cavités (31),
- dans la cavité (31), un fluide sous dépression est introduit et
- la paroi (33) du corps (30) muni de cavités (31) orientée vers le film tubulaire (2) est perméable à ce fluide, la surface (33) se resserrant de manière tronconique dans la direction de transport (z) du film tubulaire (2), la paroi (33) formant avec la direction de transport un angle entre 0 et 30 degrés.
